# EUROPEAN PATENT SPECIFICATION

(11) **EP 2 098 061 B1**
(45) Date of publication and mention of the grant of the patent: **08.08.2012**
(21) Application number: 07865836.6
(22) Date of filing: 18.12.2007
(51) Int. Cl.: H04N 1/60

(54) **SYSTEMS AND METHODS FOR PRINT COATING DE-SATURATION**
SYSTEME UND VERFAHREN ZUR ENTSÄTTIGUNG VON DRUCKBESCHICHTUNGEN
SYSTÈME ET PROCÉDÉ DE DÉSATURATION D'UNE COUCHE D'IMPRESSION

(30) Priority: 18.12.2006 US 870601 P
(43) Date of publication of application: 09.09.2009
(73) Proprietor: Adapx, Inc., Seattle WA 98104 (US)
(72) Inventor: ARTHUR, Alex M., Seattle, WA 98121 (US); ERIKSON, Erik M., Seattle, WA 98118 (US)
(74) Representative: Cordina, Kevin John
(86) International application number: PCT/US2007/087996
(87) International publication number: WO 2008/077076

(56) References cited:
- WO-A2-2005/025201
- US-A- 6 061 501
- US-A1- 2004 100 658
- US-A1- 2005 213 119
- US-B1- 6 873 434
- US-B2- 7 139 091
- NORRIE M C, SIGNER B, WEIBEL N: "Print-n-Link: Weaving the paper web" PROCEEDINGS OF THE 2006 ACM SYMPOSIUM ON DOCUMENT ENGINEERING, 13 October 2006 (2006-10-13), pages 34-42, XP040048760 2 PENN PLAZA, SUITE 701 - NEW YORK USA
- GUIMBRETIÈRE F: "Paper Augmented Digital Documents" INTERNET CITATION 2 November 2003 (2003-11-02), pages 51-60, XP007905358 Retrieved from the Internet: URL:http://delivery.acm.org/10.1145/970000 /964702/p51-guimbretiere.pdf?ke y1=964702&key2=4070957121&coll=GUIDE&dl=GU IDE&CFID=39106926&CFTOKEN=4 8365048 [retrieved on 2008-08-01]

## Description

### PRIORITY CLAIM

This application claims priority to U.S. Patent Provisional Application No. 60/870,601 filed December 18, 2006.

### BACKGROUND OF THE INVENTION

There are many different types of printers and print services in the market today. All of these printers are controlled with hardware and software that instructs the printer how to print content on a page. These instructions are generally referred to as printer language sets. Examples of printer language sets are Adobe PostScript and Printer Control Language. Any of these instruction sets exploit the characteristics of the printer being used and allows for the control of any brand of printer.

In order to print color onto a page, printers may use any color model in any color-space such as RGB or CMYK; current printers in the marketplace use a full range of colors based on a method called four color process printing. Four color process printing uses three primary ink colors cyan (C), magenta (M), and yellow(Y) plus Key (K) ("CMYK"). Key is generally black in four color process printing. Cyan, magenta, and yellow are the three main pigments used for color reproduction. When these three colors are combined in printing, the result should be a reasonable reproduction of the original, but in practice this is not the case. Due to limitations in the ink pigments, the darker colors are dirty and muddied. To resolve this, a technique called black replacement is used. One method of replacement (black replacement) is to replace highly saturated CMY values with the Key color. An example printer replaces color within a 25% range of theoretical black (fully saturated CMY) with K. This is done to increase the quality of the color, but is also done because black ink is typically less expensive then colored ink

While black replacement is beneficial for everyday home/home office printing there are several applications in which the detail or intensity of black is important to the user, such as the digital pen industry. In the digital pen industry the pen generally requires a location-encoding pattern printed on a surface to orient the pen or any other perceiving device having the ability to recognize a qualitative difference between a material used for a location encoding pattern and a material used for content. A surface is generally defined as any printable medium that can accept a print coating, injection, or fusion. By way of example the pattern may be printed with pure black ink, infrared absorbing ink, ultra violet ink or any material that can be distinguished from content material that is detectable by an infrared or other type of sensor in the pen. Content, which is defined as text, a map, images or any printable subject matter, may be placed over the pattern to allow a user with the pen to manipulate the document If the content is placed over the location-encoding pattern and the content uses black ink (in this case both the content and the pattern using the same material) then the content may interfere with the pattern not allowing the pen to effectively locate itself on the page.

The published paper "Print-n-Link: Weaving the Paper Web; Norrie, Signer & Weibel; Proceedings of the 2006 ACM symposium on document Engineering; 13 October 2006" describes processes for printing documents having a location-encoding pattern. Use of the Key colour in printing content is avoided by replacing the Key colour with another colour (e.g. pure blue), setting the K value to zero, using printers with no automatic Key colour replacement, and using hardware modification of printers to prevent use of the Key colour.

US 2004/0100658 describes a method utilising switchable look-up tables for converting RGB colour spaces to CMYK colour spaces to avoid black-tinge in areas where a location-encoding pattern is also present.

WO2005/023201 describes a method of printing content with location-encoding patterns using IR absorbing and non-IR absorbing inks to avoid obscuring the pattern.

The document "Paper Augmented Digital Documents; Guimbretiere (Internet Citation)" suggests removing the Key color cartridge from a printer to prevent its use when printing documents with location-encoding patterns.

### SUMMARY OF THE INVENTION

There is provide a method for controlling the material used to print content on a surface having a location-encoding pattern , the method comprising receiving content in a CMYK color space, translating the K value in the CMYK color-space of the content to the remaining CMY values, resulting in the K value being set to zero; characterized by adjusting each color band by a scaling factor to such that no conversion by the printer occurs to cause the Key color to be used in printing the content; and outputting the adjusted values to a printer.

A selection of optional features are set out in the dependent claims.

The systems and methods described herein alter the C, M, and Y values of the content such that it is ensured that no conversion occurs which would cause the Key color to be used in printing the content.

### BRIEF DESCRIPTION OF THE DRAWINGS

The preferred and alternative embodiments of the present invention are described in detail below with reference to the following drawings.

FIGURE 1 is a view of a print de-saturation system in one embodiment: and,

FIGURE 2 is a method of using a print de-saturation system in one embodiment; and

FIGURES 3A-C show examples of the methods and systems for print de-saturation.

### DETAILED DESCRIPTION OF THE PREFERRED EMBODIMENT

When using a digital perceiving device such as a digital pen and a surface configured to accept a print coating such as paper, a location encoding pattern is used to orient the pen on the paper, preferably the location encoding pattern should be printed using a material (such as ink, pigments etc) that is perceivably different from the material used for the content. The graphics, text, etc (hereinafter referred to as content) should be printed using a material different from the pattern material so that a digital pen can "see through" the content, which may be scanned, drawn, or otherwise overlaid onto the dot pattern. As the pen moves across the boundaries of the "overlaid" content it may become confused if the content is printed using the same material as the location encoding pattern. By way of example and in one embodiment, the pen is generally configured to read a range of black ink on paper using infrared. Thus, the system and methods described herein may operate to selectively print overlaid content onto paper having a location encoding pattern and to print the content in material that is sufficiently different from the material of the location encoding pattern on the paper. By way of example different materials for the pattern and the content may include but are not limited to: the use of colored and/or black ink with invisible infrared ink or with ultra violet absorbing ink.

Methods and systems for print de-saturation are described in further detail below. One embodiment of the invention comprises a series of steps to ensure that output content is printed in a material other then the material used to print a location encoding pattern. The series of steps advantageously override the printers systems that replace colors near to black with black by adjusting the output colors of the output content selected for printing. By way of an example when content is sent to a printer, software adapts the output so that it is configured to print correctly on the printer. In this case the output content is output with its color properties in the CMYK color model. The CMYK color model uses the combination of intensities of these colors to output the correct color on a printer. When the intensity of the colors approach black, typical software tells the printer to print black and as described further below, the methods and systems described herein allows for the content to be printed in a color other than pure black. In an alternate embodiment any color-space may be used such as RGB.

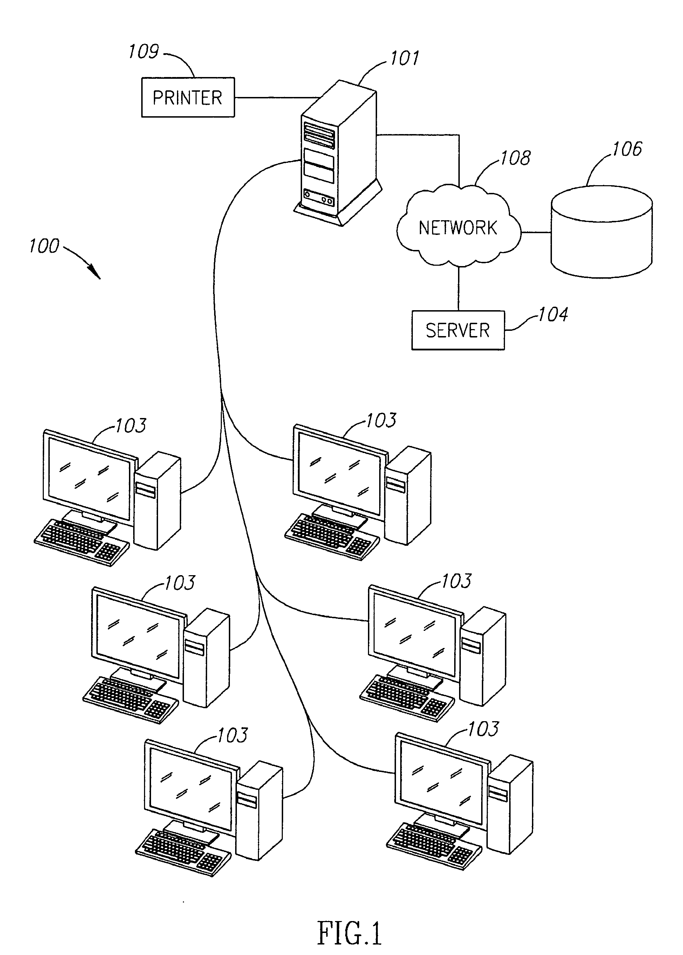

FIGURE 1 shows an example system 100 for print de-saturation. In one embodiment, the system 100 includes a computer 101 in communication with a plurality of other computers 103, and a printer 109. In an alternate embodiment, the computer 101 is connected with a plurality of computers 103, a printer 109, a server 104, a data storage center 106, and/or a network 108, such as an intranet or the Internet. Also a bank of servers, a wireless device, a cellular phone and/or another data entry device can be used in the place of the computer 101. In one embodiment, a postscript file stores computer executable instructions for print de-saturation. The postscript file is stored at the data storage center 106 or locally at the computer 101. In an alternate embodiment a printer control language file or a printer instruction set may be used.

In one embodiment, the postscript file, run by the server 104 or computer 101 alters the print output sent to the printer 109. A postscript generation code set contains instructions to be run by a processor in computer 101 or a server 104, alternatively instructions may be stored on the printer 109, such as on board postscript RIP's. The postscript generation code preferably, in one embodiment places "correct" values into a postscript file that is responsible for specifying what to draw and how to draw it. The instructions include separating the selected output content destined for the printer into separate color bands in the CMYK color spectrum. The instructions further include translating the black value to the CMY values resulting in the K value being zero and adjusting the color bands (CMY) using a scaling factor to less than or equal to the predetermined color intensity. The instructions further include outputting the modified output content to the printer 109.

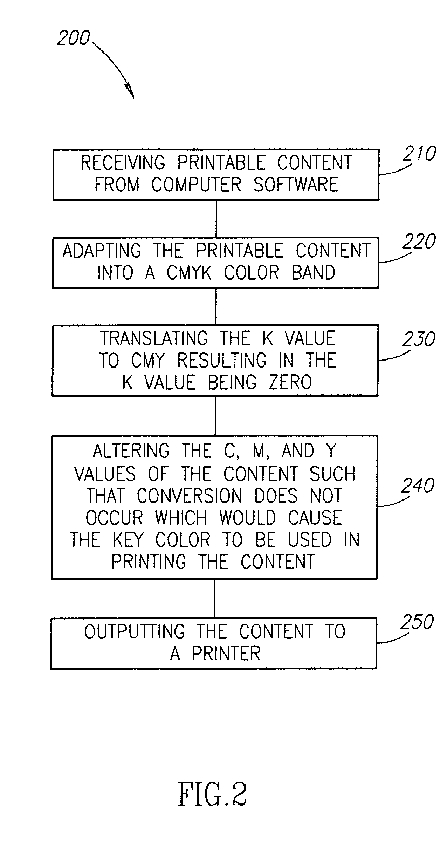

FIGURE 2 is a method 200 of using a print de-saturation system in one embodiment. At step 210, printable content is received from computer; the content is configured for printing on a typical printer. At step 220, the printable content is adapted into the CMYK color model as necessary. The CMYK model is the typical four color printing model and each color printed on the page is made up of a combination of some or all colors in the CMYK color model. At step 230, the value of K or black in one example is translated to the CMY values resulting in the K value being zero. By way of example each dot printed is made up of some or all of the colors and each band of color can be adjusted, therefore allowing the K value to be translated to the CMY values to be separately adjusted. At step 240, the C, M, and Y values of the content is altered such that conversion does not occur which would cause the Key color to be used in printing the content. One method of adjusting the values includes using PostScript files, by invoking the one-operand version of the 'image' command. The command allows the specification of a sample decoding matrix. The default may be to map all samples between 0.0 and 1.0 (the full spectrum). An embodiment of the present invention instead maps samples between 0.0 and some value less than 1.0 (e.g. 0.8). At step 250, the adjusted content is output to a printer.

In one exemplary embodiment, the systems and methods disclosed herein are used when printing a location-encoding pattern on paper for use with digital pen systems. For example when printing infrared-absorbent ink (e.g., carbon-based black) on top of location-encoding pattern, the ink for the content can cover the dots of the pattern, thus hiding the pattern from the infrared sensor in the digital pen. The goal is to reduce the amount of infrared-absorbent ink (e.g., black carbon) used for content, so that the digital pen can locate itself on the paper. As shown above, the systems and methods disclosed herein restrict the CMYK color space for content, but allow the full CMYK range for the location-encoding pattern (e.g., the dots comprising the location-encoding pattern). The dots can be printed with black carbon ink, whereas the content can be printed with a mixture of cyan, magenta, yellow, and/or, to a lesser degree, black. The result is a reduction in the use of carbon black dots for content, which therefore will not hide the underlying pattern from digital pens.

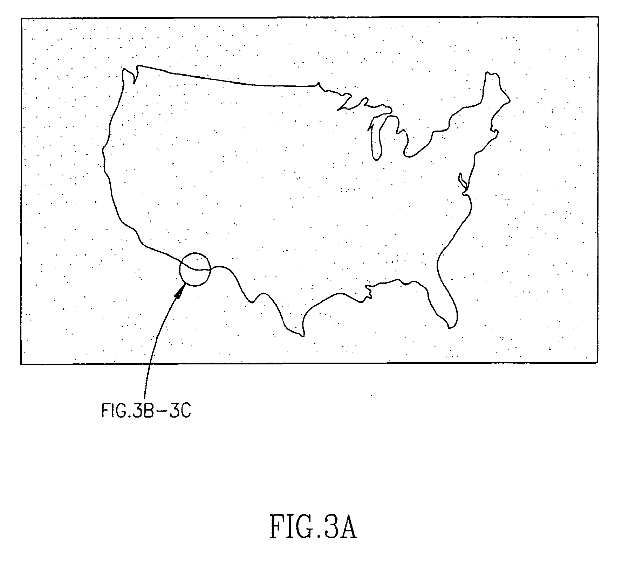

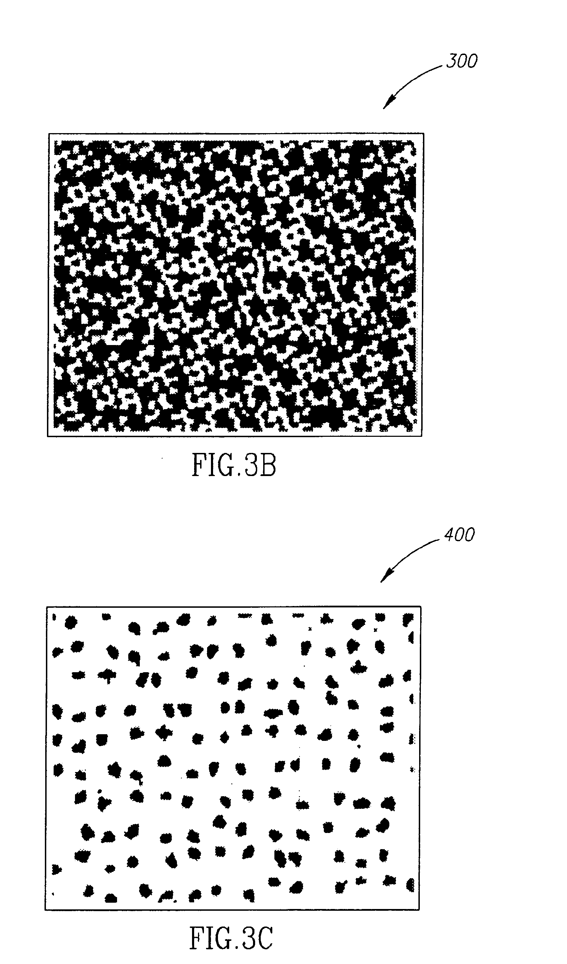

FIGURES 3A-C show examples of the methods and systems for print de-saturation. FIGURE 3A shows an example of a paper printed with a location encoding pattern and content. In this case the content is a map of the United States. Figures 3B-3C shown an exploded view of the line in 3A from the infrared sensor of a Techkon DMS910 digital microscope taken on the same spot on a piece of paper printed with a black box covering a location-encoding pattern. Figure 3B does not utilize the technique of an embodiment of the present invention, and thus the same carbon-based black ink is used for the location-encoding pattern and the content. The infrared sensor cannot distinguish them. Figure 3C shows the output of the same file printed using the technique of an embodiment of the present invention. By restricting the output color space and not printing with the full spectrum, pure carbon-based black is not rendered in the content. It may be a composition of cyan, magenta, yellow, and/or a small amount of carbon-based black. Therefore, the infrared sensor can distinguish between the composed black in the content and the pure black of the dots. Visually, the composed black looks only sightly faded.

In an alternate embodiment, in order to advantageously ensure that the pattern material is different from the content material, the system and method eliminates one color in the color-space per pixel of the printed content, leaving the remaining colors at their predetermined intensities. For example if using the RGB color-space for the content material and pure black for the pattern material, then in any three neighboring pixels the first pixel has its R value set to zero, the second pixel its G value set to 0 and the third pixel its B value set to zero with this pattern alternating horizontally and vertically ensuring that the content is not printed in black because the RGB combination is below the threshold for black replacement.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A method for controlling the material used to print content on a surface having a location-encoding pattern, the method comprising:
receiving content in a CMYK color space,
separating the content into separate color bands in the CMYK color spectrum,
translating the K value of the content in the CMYK color-space to the C, M and Y values, resulting in the K value being set to zero;
**characterized by**
adjusting each color band of C, M and Y by a scaling factor such that no conversion by a printer occurs which would cause the black (K) colour to be used in printing the content; and
outputting the adjusted values to a printer.

2. The method of Claim 1, wherein black ink is not used to print content in the output.

3. The method of Claim 1, further comprising:
printing the adjusted colors and a location-encoding pattern on a printer.

4. The method of Claim 1, wherein the content is manipulated in a PostScript file.

## Patentansprüche

1. Verfahren zur Steuerung des Materials, das verwendet wird, um einen Inhalt auf eine Oberfläche mit einem Positionskodierungsmuster zu drucken, wobei das Verfahren Folgendes umfasst:
Empfang von Inhalt in einem CMYK-Farbraum,
Trennung des Inhalts in getrennte Farbbänder im CMYK-Farbspektrum.
Übertragung des K-Werts des Inhalts im CMYK-Farbraum in die C-, M- und Y-Werte, was dazu führt, dass der K-Wert auf Null gesetzt wird;
**gekennzeichnet durch**
Anpassung jedes Farbbandes von C, M und Y um einen Skalierungsfaktor, so dass keine Umwandlung **durch** einen Drucker stattfindet, die verursachen würde, dass die schwarze (K) Farbe beim Druck des Inhalts verwendet wird; und
Ausgabe der angepassten Werte an einen Drucker.

2. Verfahren nach Anspruch 1, wobei schwarze Tinte nicht verwendet wird, um den Inhalt in der Ausgabe zu drucken.

3. Verfahren nach Anspruch 1, weiter umfassend:
Druck der angepassten Farben und eines Positionskodierungsmusters auf einem Drucker.

4. Verfahren nach Anspruch 1, wobei der Inhalt in einer PostScript-Datei gehandhabt wird.

## Revendications

1. Procédé pour commander le matériau utilisé pour imprimer un contenu sur une surface possédant un motif d'encodage de localisation, le procédé comprenant :
la réception de contenu dans un espace de couleur CMYK,
la séparation du contenu en bandes de couleur séparées dans le spectre de couleur CMYK,
la traduction de la valeur K du contenu dans l'espace de couleur CMYK en valeurs C, M et Y, ayant pour résultat l'établissement de la valeur K à zéro ;
**caractérisé par** :
le réglage de chaque bande de couleur de C, M et Y par un facteur d'échelle de sorte qu'aucune conversion par l'imprimante ne se produise qui entraînerait l'utilisation de la couleur noire (K) dans l'impression du contenu ; et
l'envoi des valeurs réglées à une imprimante.

2. Procédé selon la revendication 1, dans lequel de l'encre noire n'est pas utilisée pour imprimer un contenu dans l'envoi.

3. Procédé selon la revendication 1, comprenant en outre :
l'impression des couleurs réglées et d'un motif d'encodage de localisation sur une imprimante.

4. Procédé selon la revendication 1, dans lequel le contenu est manipulé dans un fichier PostScript.
